(19) **Europäisches Patentamt**
**European Patent Office**
**Office européen des brevets**

(11) **EP 3 889 741 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **21163693.1**

(22) Anmeldetag: **19.03.2021**

(51) Internationale Patentklassifikation (IPC):
**G06F 3/01** (2006.01) **G05B 19/418** (2006.01)
**G06T 19/00** (2011.01)

(52) Gemeinsame Patentklassifikation (CPC):
**G06F 3/011; G06T 19/006**

(54) **VERFAHREN ZUR BEWERTUNG DER EINBAUPOSITION EINES MESSGERÄTS IN EINER ANLAGE, AUGMENTED-REALITY-GERÄT UND VERFAHREN ZUM EINBAU EINES MESSGERÄTS**

METHOD FOR EVALUATING THE INSTALLATION POSITION OF A MEASURING DEVICE IN AN INSTALLATION, AUGMENTED REALITY DEVICE AND METHOD FOR INSTALLING A MEASURING DEVICE

PROCÉDÉ D'ÉVALUATION DE LA POSITION DE MONTAGE D'UN APPAREIL DE MESURE DANS UNE INSTALLATION, APPAREIL DE RÉALITÉ AUGMENTÉE ET PROCÉDÉ DE MONTAGE D'UN APPAREIL DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2020 DE 102020109357**

(43) Veröffentlichungstag der Anmeldung:
**06.10.2021 Patentblatt 2021/40**

(73) Patentinhaber: **Krohne Messtechnik GmbH**
**47058 Duisburg (DE)**

(72) Erfinder:
• **Förster, Jan**
**45149 Essen (DE)**
• **Krawczyk-Becker, Martin**
**44653 Herne (DE)**

(74) Vertreter: **Gesthuysen Patentanwälte**
**Partnerschaftsgesellschaft mbB**
**Huyssenallee 68**
**45128 Essen (DE)**

(56) Entgegenhaltungen:
DE-A1- 102017 010 190   DE-A1- 102018 214 210
US-A1- 2013 038 633   US-A1- 2017 076 500
US-A1- 2018 129 276   US-A1- 2019 020 721

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung geht aus von einem Verfahren zur Bewertung der Einbauposition eines Messgeräts, nämlich eines Durchflussmessgeräts oder eines Füllstandmessgeräts, in einer Anlage mit einem Augmented-Reality-Gerät, wobei das Augmented-Reality-Gerät wenigstens eine Erfassungseinheit zur Erfassung der Anlage, wenigstens eine Recheneinheit und wenigstens eine Anzeigeeinheit aufweist.

Darüber hinaus betrifft die Erfindung ein Augmented-Reality Gerät mit wenigstens einer Erfassungseinheit zur Erfassung der Anlage, wenigstens einer Recheneinheit und mit wenigstens einer Anzeigeeinheit.

Zudem betrifft die Erfindung ein Verfahren zum Einbau eines Durchflussmessgeräts oder Füllstandmessgeräts in eine Anlage.

Beim Einbau von Messgeräten in bereits bestehende Anlagen oder auch beim Austausch von bereits eingebauten Messgeräten sind für die korrekte Funktionsweise des Messgeräts Bedingungen hinsichtlich der Position und auch der Art des Messgeräts einzuhalten. Beispielsweise sind bei dem Einbau von Durchflussmessgeräten zu beachtende Parameter die empfohlene Ein- und Auslaufstrecke, die Positionierung in Bezug auf Fallleitungen oder Winkel und die Positionierung zu anderen Komponenten der Anlage wie beispielsweise Ventile oder Pumpen. Nicht immer lassen sich alle Faktoren gleichzeitig vollständig erfüllen, gerade in dem hier betrachteten Fall, in dem ein Messgerät in eine bereits existierende Anlage einzubauen ist. Beispielsweise kann es passieren, dass es bei der vorliegenden Verrohrung nicht möglich ist, die vom Hersteller empfohlenen Ein- und Auslaufstrecken einzuhalten. Es wird also ein "optimaler" Kompromiss unter den gegebenen Randbedingungen benötigt.

Aus der Druckschrift DE 10 2018 104 056 B3 ist ein Verfahren zur optimierten Anordnung und Ausrichtung eines Feldgerätes mit einem Modul, das für das menschliche Auge nicht sichtbare Strahlung aussendet unter Verwendung eines Augmented-Reality-Gerätes bekannt. Die Optimierung der Ausrichtung erfolgt durch Überlagern der Abstrahlcharakteristik mit dem Realitätsanteil, wodurch innerhalb der Abstrahlcharakteristik angeordnete Gegenstände bestimmt werden können. Ein aufwendiges Testen der Sende- und Empfangseigenschaften des Feldgeräts kann dadurch vermieden werden.

Aus der Druckschrift DE 10 2017 010190 A1 ist ein Verfahren zum virtuellen Konfigurieren einer Bioprozesseinrichtung mittels eines Augmented-Reality-Systems bekannt. Das Verfahren ermöglicht einem Nutzer ein physisches Einrichtungselement der Bioprozesseinrichtung in einer physischen Umgebung des Nutzers mittels einer Kamera des Augmented-Reality-Systems aufzunehmen, und dann als virtuelles Einrichtungselement in einer virtuellen Umgebung mit weiteren virtuellen Einrichtungselementen zu einer virtuellen Bioprozesseinrichtung zusammenzubauen. Der Nutzer kann ein virtuelles Einrichtungselement in der virtuellen Umgebung zur Replatzierung auswählen, sowie weitere virtuelle Einrichtungselemente der virtuellen Umgebung hinzufügen, wobei eine Recheneinheit für das zur Replatzierung oder Hinzufügung ausgewählte virtuelle Einrichtungselement die optimale Position in der virtuellen Umgebung bzw. virtuellen Bioprozesseinrichtung berechnet, und über eine Anzeige des Augmented-Reality-Systems anzeigt.

Zudem ist aus den Dokumenten US 2019/0035152 A1, US 2013/0144482 A1, US 2017/0255450 A1 und US 2016/0247324 die Anwendung von Augmented-Reality Geräten in verschiedenen Einsatzbereichen bekannt.

Weiterer Stand der Technik auf dem vorliegenden technischen Gebiet findet sich in den Druckschriften DE 10 2018 214210 A1, US 2013/038633 A1, US 2018/129276 A1, US 2019/020721 A1 und US 2017/076500 A1.

Aufgabe der vorliegenden Erfindung ist es, ausgehend von dem dargelegten Stand der Technik ein verbessertes Verfahren zur Bewertung der Einbauposition eines Messgeräts anzugeben. Darüber hinaus ist es Aufgabe der Erfindung ein entsprechendes Augmented-Reality Gerät und ein Verfahren zum Einbau eines Messgeräts in eine Anlage anzugeben.

Gemäß einer ersten Lehre der Erfindung wird die zuvor genannte Aufgabe durch ein Verfahren gemäß Anspruch 1 gelöst.

Erfindungsgemäß wurde erkannt, dass die Einbauposition eines bereits eingebauten Messgeräts oder eines einzubauenden Messgeräts im Hinblick auf die Vorgaben für den Einbau zur Gewährleistung einer korrekten Funktionsweise virtuell überprüft und entsprechend bewertet werden kann, sodass ein fehlerhafter Einbau erkannt und/oder vermieden werden kann. Grundsätzlich hasiert die Idee auf der Erstellung eines virtuellen 3D- und/oder 2D-Modells der realen Anlage, wobei insbesondere das zu bewertende Messgerät manuell und/oder durch die Recheneinheit automatisch zugeordnet wird und/oder wobei ein virtuelles Messgerät vorzugsweise manuell in dem Modell der Anlage an der gewünschten Einbaustelle angeordnet werden kann. Das erkannte Messgerät bzw. das in die Anlage platzierte Messgerät ist verknüpft mit einer Liste von Einbaukriterien, wobei zur Bewertung der Einbauposition des Messgeräts durch die Recheneinheit überprüft wird, ob und inwieweit die Einbaukriterien erfüllt sind.

Die Zuordnung des Messgerätes umfasst sowohl die Erkennung der Art des Messgeräts, also, ob es sich beispielsweise um ein Durchflussmessgerät oder ein Füllstandmessgerät handelt, als auch die Erkennung des Messgerättyps. Darüber hinaus umfasst die Zuordnung auch die Erkennung, ob es sich um ein Kompaktgerät oder ein Remote-Gerät handelt.

Dabei ist ein Kompaktgerät ein Messgerät, das sämtliche Komponenten insbesondere zur Steuerung des Messgeräts und zur Auswertung der gemessenen Daten aufweist. Dagegen ist ein Remote-Gerät ein Messgerät, bei dem wenigstens eine Komponente nicht unmittelbar am Messgerät angeordnet ist, das insbesondere über eine Fernsteuerung bedienbar ist.

Gemäß einer vorteilhaften Ausgestaltung umfasst das Augmented-Reality-Gerät wenigstens ein AR Headset, Smart Glasses, wenigstens ein Smart Phone oder wenigstens ein Tablet. Andere Vorrichtungen, die eine Visualisierung einer realen Anlage und/oder eine Überlagerung einer solchen Visualisierung mit einem virtuellen Messgerät ermöglichen, sind ebenfalls geeignet zur Realisierung des erfindungsgemäßen Verfahrens.

Besonders bevorzugt leitet die Erfassungseinheit zur Erstellung des Modells der Anlage Bilddaten und/oder Videodaten und/oder Wärmebilddaten und/oder Stereodaten und/oder Tiefenkameradaten an die Recheneinheit und/oder an die Anzeigeeinheit weiter. Gemäß einer bevorzugten Ausgestaltung umfasst die Erfassungseinheit wenigstens eine Kamera und/oder eine Wärmebildkamera und/oder eine Tiefenkamera.

Eine weitere Ausgestaltung ist dadurch gekennzeichnet, dass die Recheneinheit basierend auf den von der Erfassungseinheit übermittelten Daten die Art und/oder die Größe und/oder die Länge und/oder die Orientierung einzelner Komponenten der Anlage, erkennt.

Im Detail handelt es sich bei den Komponenten der Anlage insbesondere um Ventile, Pumpen, Rohre, Rohrverbinder, Rohrstücke, Schieber, Düker, Behälter und/oder Messgeräte.

Alternativ oder zusätzlich können die Art und/oder die Größe und/oder die Länge und/oder die Orientierung einzelner Komponenten der Anlage manuell durch den Nutzer eingegeben und/oder korrigiert werden.

Handelt es sich bei der Komponente um ein Rohr oder ein Rohrstück oder einen Rohrverbinder, so umfasst die Größe insbesondere den inneren und/oder den äußeren Rohrdurchmesser.

Gemäß einer weiteren Ausgestaltung erkennt die Recheneinheit ebenfalls die Orientierung des zu bewertenden Messgeräts und/oder der Komponenten der Anlage. Besonders bevorzugt ermittelt die Recheneinheit die Flussrichtung eines Mediums durch die Anlage insbesondere basierend auf der Orientierung des Messgeräts und/oder der Komponenten der Anlage und/oder unter Berücksichtigung der Beschriftung des Messgeräts und/oder der Beschriftung wenigstens einer Komponente der Anlage.

Alternativ kann die Flussrichtung auch durch den Nutzer, beispielsweise durch Wischen über die Anzeigeeinheit, angegeben werden.

Erfindungsgemäß ist das Messgerät, dessen Einbauposition zu beurteilen ist, ein Füllstandmessgerät oder ein Durchflussmessgerät. Beim Einbau entsprechender Messgeräte in bestehende Anlagen sind zur Gewährleistung einer korrekten Funktionsweise verschiedene Vorgaben insbesondere hinsichtlich der Lage des eingebauten Messgeräts zu berücksichtigen. Mittels des erfindungsgemäßen Verfahrens lässt sich in vorteilhafter Weise prüfen und darstellen, ob die Vorgaben an der vorgesehenen Einbaustelle des Messgeräts erfüllt sind. Besonders bevorzugt kann mit dem erfindungsgemäßen Verfahren die Einbauposition einer Mehrzahl von Messgeräten unterschiedlicher Art oder auch gleicher Messgeräte bestimmt werden

Erfindungsgemäß werden zur Bewertung der Einbauposition des wenigstens einen erkannten und/oder virtuellen Durchflussmessgeräts oder Füllstandmessgeräts Einbaukriterien herangezogen, wobei die Einbaukriterien die relative Lage des Durchflussmessgeräts oder Füllstandmessgeräts zu wenigstens einer weiteren Komponente der Anlage und/oder die Flussrichtung eines Mediums und/oder die Art des Messgeräts und/oder die Einbauumgebung des Durchflussmessgeräts oder Füllstandmessgeräts berücksichtigen.

Ist das einzubauende Messgerät ein Kompaktgerät, umfassen die Einbaukriterien ebenfalls die Prüfung, ob ausreichend Platz für den Einbau eines solchen Messgeräts vorhanden ist.

Gemäß einer Ausgestaltung des Verfahrens umfassen die Einbaukriterien ebenfalls die Ausrichtung des Messgeräts. Ist das erkannte oder virtuell positionierte Durchflussmessgerät ein Kompaktgerät, so prüft die Recheneinheit insbesondere die Positionierung des Konverter-Gehäuses.

Ist das Konverter-Gehäuse seitlich des Durchflussmessgeräts angeordnet, so wird die Ausrichtung des Durchflussmessgeräts als ungeeignet bewertet. In geeigneten Ausrichtungen ist das Konverter-Gehäuse oberhalb oder unterhalb des Messrohrs des Durchflussmessgeräts angeordnet.

Zudem werden bei der Bewertung der Einbauposition eines Durchflussmessgerätes Positionen als ungeeignet bewertet, in denen beispielsweise das Durchflussmessgerät auf der Saugseite einer Pumpe installiert ist und/oder in denen das Durchflussmessgerät hinter einem Ventil oder einem Schieber eingebaut ist und/oder in denen das Durchflussmessgerät in eine Fallleitung eingebaut ist.

Zur Bestimmung der Bewertung der Einbauposition wird vorzugsweise ebenfalls berücksichtigt, ob das Durchflussmessgerät in eine horizontale Leitung eingebaut ist und/oder ob ein Düker vor einem freien Auslauf zur Sicherstellung eines vollgefüllten Rohrs vorhanden ist und/oder ob die empfohlene Länge des Einlaufs vor dem Durchflussmessgerät eingehalten ist und/oder ob die empfohlene Länge des Auslaufs hinter dem Durchflussmessgerät eingehalten ist und/oder ob der Durchmesser des Messrohrs des einzuhbauenden Durchflussmessgeräts mit dem Durchmesser der Verrohrung der Anlage im Wesentlichen übereinstimmt und/oder ob eine Verjüngung vor dem Messgerät vorhanden ist und/oder ob die Höhe der Anzeige der Messwerte geeignet zur Ablesung ist, vorzugsweise ob die Anzeige auf einer Höhe zwischen 0,5 m und 1,70 m, besonders bevorzugt auf einer Höhe von ungefähr 1,1 m, angeordnet ist.

Besonders bevorzugt wird zur Bestimmung der Bewertung ebenfalls berücksichtigt, ob die Anlage am Ort der Einbauposition Vibrationen aufweisen kann. Liegen die zu erwartenden Vibrationen oberhalb eines Grenzwertes, wird durch die Recheneinheit ein Remote-Gerät vorgeschlagen.

Weiterhin wird zur Bestimmung der Bewertung der Einbauposition vorzugsweise ebenfalls berücksichtigt, ob der empfohlene Abstand zwischen einem T-Stück und dem Einlass des Durchflussmessgeräts eingehalten ist.

Weist das Durchflussmessgerät ein V-förmig oder U-förmig gebogenes Messrohr auf, wird vorzugsweise ebenfalls geprüft, ob die Krümmung des Durchflussmessgeräts bei der Messung von Gasen nach oben ausgerichtet ist bzw. ob die Krümmung des Durchflussmessgeräts bei der Messung von Flüssigkeiten nach unten ausgerichtet ist. Dies vor dem Hintergrund, dass sich in der Krümmung Kondensat oder Gase sammeln können.

Insbesondere bei hygienischen Anwendungen, bei denen die Rohre vollständig entleert werden müssen, wird vorzugsweise geprüft, ob die Krümmung bei V-förmigen Durchflussmessgeräten so positioniert ist, dass die Durchflussmessgeräte immer leerlaufen können. Dies ist dann erfüllt, wenn die Krümmung zur Seite ausgerichtet ist.

Neben der Bewertung der Einbauposition bzw. der Ausrichtung eines Durchflussmessgeräts kann die Recheneinheit ebenfalls vorzugsweise Empfehlungen zur weiteren Optimierung der erfassten Anlage und damit zur Optimierung der Randbedingungen der Einbauposition des Messgeräts anzeigen. Hierzug überprüft die Recheneinheit weitere Optimierungskriterien.

Besonders bevorzugt wird die Installation eines automatischen Luftablassventils am oberen Ende einer Fallleitung vorgeschlagen, wenn diese Fallleitung mehr als 5 m Höhendifferenz überwindet, um Gase, die durch Kavitation aus dem flüssigen Medium austreten, aus dem Rohr zu entfernen, um so das Strömungsprofil nicht zu verfälschen.

Vorzugsweise wird ebenfalls ein zusätzlicher Platzbedarf bei thermischer Isolierung berücksichtigt, wobei in dem Augmented-Reality-Gerät hinterlegt ist, welche Bauteile des Messgeräts nicht mit thermischer Isolierung verkleidet werden dürfen.

Ist das erkannte Durchflussmessgerät ein Coriolis-Massedurchflussmessgerät, so wird eine stabile Aufhängung des Rohrleitungssystems empfohlen, um zu verhindern, dass das Gewicht des Messgeräts die Rohre der Anlage verbiegen kann.

Besonders bevorzugt wird ebenfalls empfohlen, die Durchflussmessgeräte vor starker Sonneneinstrahlung zur schützen.

Ist das zu bewertende Messgerät ein Füllstandmessgerät, sind entsprechend für den Einbau des Füllstandmessgeräts relevante Kriterien zu prüfen.

Die Bewertung der Einbauposition umfasst insbesondere eine Darstellung als geeignete Einbauposition und eine Darstellung als ungeeignete Einbauposition. Die Darstellung der Bewertung kann beispielsweise einen Haken für eine geeignete Einbauposition und ein Kreuz für eine ungeeignete Einbauposition umfassen.

Neben einer Bewertung als geeignet oder ungeeignet ist es ebenso möglich, Abstufungen zwischen den zuvor genannten Bewertungen zu bestimmen und vorzugsweise über die Anzeigeeinheit auszugeben. Auf diese Weise können unterschiedliche, grundsätzlich geeignete Einbaupositionen miteinander verglichen werden.

Gemäß einer Ausgestaltung erfolgt die Bewertung der Einbauposition auf einer Skala, wobei die Darstellung der Bewertung durch eine farbliche Kennzeichnung und/oder durch einen Zahlenwert und/oder durch einen weiteren skalierbaren Parameter angezeigt wird.

Besonders bevorzugt umfasst die Bewertung eine Gesamtbewertung, wobei die Gesamtbewertung sich aus der Kombination mehrerer Einzelbewertungen ergibt, wobei jede Einzelbewertung die Bewertung eines einzelnen Einbaukriteriums betrifft.

Besonders bevorzugt werden die einzelnen Einbaukriterien bei der Bestimmung der Gesamtbewertung unterschiedlich gewichtet. Die Gewichtung kann für sämtliche Bewertungen festgelegt sein oder für einzelne Bewertungen, insbesondere von dem Nutzer, festgelegt werden.

Gemäß einer vorteilhaften Ausgestaltung umfasst die Gesamtbewertung der Einbauposition eines Durchflussmessgeräts die Abfrage und Bewertung wenigstens eines der folgenden Kriterien, wobei die Bewertung, ob die vorgegebenen Kriterien erfüllt sind, durch jeweils einen Bewertungsparameter $x_i$ quantifiziert wird:

- Ist das Messgerät hinter einem Ventil und/oder vor einer Pumpe positioniert? Falls ja, ist $x_1 = 0$, anderenfalls ist $x_1 = 1$.

- Ist das Messgerät in eine Fallleitung eingebaut? Falls ja, ist $x_2 = 0$, anderenfalls ist $x_2 = 1$.

- Ist der Messrohrdurchmesser größer als die Verrohrung? Falls ja, ist $x_3 = 0$, anderenfalls ist $x_3 = 1$.

- Bestimmung des Bewertungsparameters der empfohlenen Einlaufstrecke $x_4$ = (tatsächlicher_einlauf / empfohlener_einlauf), wobei $x_4$ auf maximal 1 beschränkt wird.

- Bestimmung des Bewertungsparameters einer durch eine Verjüngung optimierte Einlaufstrecke x5. Falls der Bewertungsparameter x4 = 1 ist, dann ist x5 = 1, ansonsten ist x5 = x4 * x4.

- Bestimmung des Bewertungsparameters der empfohlenen Auslaufstrecke $x_6$ = (tatsächlicher_auslauf / empfohlener_auslauf), wobei $x_6$ auf maximal 1 beschränkt wird.

- Ist das Display des Messgeräts gut sichtbar angeordnet? Ist das Display verdeckt, dann ist $x_7$ = 0. Ist das Display sichtbar, dann ist

$$x_7 = \exp(-1 * (1,1\ m - einbauhöhe\_in\_m)^{\wedge}2).$$

- Ist der Einbauwinkel des Messgeräts relativ zur horizontalen Achse größer als der Arkustangens des Verhältnisses von Innendurchmesser des Geräts und tatsächlicher Einlaufstrecke, so ist $x_8$ = 1. Ist der Einbauwinkel des Messgeräts relativ zur horizontalen Achse kleiner als der Arkustangens des Verhältnisses von Innendurchmesser des Geräts und tatsächlicher Einlaufstrecke und ist hinter dem Messgerät ein Düker oder eine Steigleitung angeordnet, so ist $x_8$ = 1. Anderenfalls ist $x_8$ = 0.

- Ist das Messgerät an einem teilgefüllten Rohr angeordnet? Falls ja, ist $x_9$ = 0, anderenfalls ist $x_9$ = 1.

- Ist ausreichend Platz für ein Kompaktgerät vorhanden? Falls ja, ist $x_{10}$ = 1, anderenfalls ist $x_{10}$ = 0.

Jedes des zuvor beschriebenen Kriterien entspricht einem der oben genannten Einzelkriterien zur Bestimmung einer Gesamtbewertung.

Die Gesamtbewertung der Einbauposition eines Messgeräts ergibt sich aus der Gesamtbetrachtung der Bewertungsparameter $x_i$, wobei i = 1...10. Ist einer der Bewertungsparameter $x_i$ = 0, so ist gemäß einer Ausgestaltung die Gesamtbewertung ebenfalls 0 und die Einbauposition wird als schlecht bzw. nicht geeignet bewertet.

Die Gesamtbewertung ergibt sich vorzugsweise aus einer Mittelung der einzelnen Bewertungsparameter $x_i$. Die höchste mittlere Bewertung wird als am besten bewertete Einbauposition gewertet.

Alternativ kann zur Bestimmung der Gesamtbewertung auch die Summe der einzelnen Bewertungsparameter $x_i$ gebildet werden. Denkbar ist ebenso, dass die einzelnen Bewertungsparameter $x_i$ durch eine andere Rechenoperation miteinander verbunden werden.

Durch die Bestimmung der Gesamtbewertung, die für unterschiedliche Positionen innerhalb der Anlage unterschiedliche Werte annehmen kann, lassen sich einzelne Positionen im Hinblick auf eine mögliche Einbauposition eines Messgeräts vergleichen.

Eine optimale Einbauposition ist gemäß einer Ausgestaltung dadurch definiert, dass einerseits die Gesamtbewertung die am besten bewertete Einbauposition ist und dass andererseits der Wert der Gesamtbewertung über einem Schwellwert liegt, insbesondere größer 0,5 oder größer 1 ist.

Eine weitere Ausgestaltung des Verfahrens zeichnet sich dadurch aus, dass sofern die Gesamtbewertung einer Einbausituation zu schlecht, insbesondere zu niedrig ist, beispielsweise wenn die Gesamtbewertung unter dem festgelegten Schwellwert liegt, die Recheneinheit eine Einbauposition mit einer besseren, insbesondere höheren Gesamtbewertung, vorzugsweise unter Berücksichtigung virtueller baulicher Veränderungen der Anlage ermittelt und über die Anzeigeeinheit darstellt.

Hierzu ermittelt die Recheneinheit vorzugsweise zunächst die Bewertungsparameter $x_i$ deren Wert $x_i$ = 0 war oder deren Wert $x_i$ unter dem festgelegten Schwellwert lag und ändert virtuell die Anlage, um die entsprechende Vorgabe zu erfüllen und den Wert des entsprechenden Bewertungsparameters $x_i$ zu erhöhen. Beispielsweise kann bei einer suboptimalen Einlaufstrecke der Einbau einer Verjüngung den Bewertungsparameter $x_4$ erhöhen. Anschließend wird basierend auf der veränderten Anlage erneut die Gesamtbewertung der Einbauposition bestimmt.

Gemäß einer weiteren bevorzugten Ausgestaltung ist jede bauliche Änderung der Anlage verknüpft mit einem Kostenfaktor für die jeweilige bauliche Veränderung.

Besonders bevorzugt wird dem Nutzer die Einbauposition mit der besten Bewertung und den niedrigsten Umbaukosten als Optimierungsvorschlag angezeigt. Dabei ist die Gewichtung der Kosten und der Optimierung der Einbauposition für jeden Einzelfall veränderbar und durch den Nutzer festzulegen.

Erfindungsgemäß bestimmt die Recheneinheit unter Berücksichtigung der, insbesondere gewichteten, Einbaukriterien eine optimale Einbauposition des Durchflussmessgeräts oder Füllstandmessgeräts in der Anlage, wobei die optimale Einbauposition in der Visualisierung der Anlage dargestellt wird. Dies hat den Vorteil, dass unter Berücksichtigung der Gegebenheiten der Anlage eine bestmögliche Einbauposition bestimmt werden kann, selbst wenn nicht sämtliche Vorgaben für den Einbau des Messgeräts erfüllt werden können.

Zur Bestimmung der optimalen Einbauposition wird gemäß einer besonders bevorzugten Ausgestaltung die Bewertung, insbesondere die Gesamtbewertung, aller möglichen Einbaupositionen verglichen. Erfindungsgemäß wird die Einbauposition mit der besten, insbesondere der höchsten, Bewertung wird als optimale Einbauposition über die Anzeigeeinheit, ausgegeben. Gemäß dieser Ausgestaltung können verschiedene Einbaupositionen objektiv, also anhand ihrer Gesamtbewertungen, miteinander verglichen werden, sodass eine für die bestehende Anlage optimale Einbauposition bestimmt werden kann.

Erfindungsgemäß ist vorgesehen, dass wenigstens eine Komponente der Anlage durch den Nutzer und/oder durch die Recheneinheit hinsichtlich ihrer Art und/oder ihrer Position und/oder ihrer Abmessungen und/oder ihrer Orientierung in der Visualisierung der Anlage, also virtuell, geändert wird und/oder dass wenigstens eine Komponente der Visualisierung der Anlage hinzugefügt und/oder aus der Anlage entfernt wird, sodass im Ergebnis die Anlage virtuell zumindest teilweise verändert wird und dass die Einbauposition des Durchflussmessgeräts oder Füllstandmessgeräts in der veränderten Anlage bewertet wird und/oder dass die optimale Einbauposition des Durchflussmessgeräts oder Füllstandmessgeräts in der veränderten Anlage bestimmt wird. In besonders vorteilhafter Weise kann gemäß dieser Ausgestaltung bewertet werden, welche Änderungen an der bestehenden Anlage vorgenommen werden müssen, damit die Einbausituation für das Messgerät verbessert werden kann.

Besonders bevorzugt ermittelt die Recheneinheit die Einbaukriterien, die durch die Einbauposition des erkannten oder virtuellen Messgeräts in der Anlage nicht oder nicht vollständig erfüllt sind. Diese nicht oder nicht vollständig erfüllten Einbaukriterien werden dem Nutzer vorzugsweise über die Anzeigeeinheit angezeigt. Besonders bevorzugt wird ebenfalls ein Optimierungsvorschlag angezeigt, der eine Änderung der Anlage umfasst.

Beispielsweise wird gemäß einer Ausgestaltung in dem Fall, in dem ein Durchflussmessgerät in eine horizontale Leitung eingebaut ist, vorgeschlagen, einen leichten Anstieg der Rohrleitung vorzusehen. Zudem schlägt die Recheneinheit beispielsweise in dem Fall, in dem nicht ausreichend Platz für ein Kompaktgerät zur Verfügung steht vor, ein Remotegerät einzubauen.

Gemäß einer weiteren vorteilhaften Ausgestaltung weist das Augmented-Reality-Gerät eine Speichereinheit auf, wobei in der Speichereinheit Daten von einer Mehrzahl von Messgeräten und/oder von einer Mehrzahl von weiteren Komponenten der Anlage hinterlegt sind, wobei die Recheneinheit basierend auf den hinterlegten Daten insbesondere die Art des Messgeräts und/oder die Art und/oder die Abmessungen wenigstens einer weiteren Komponente bestimmt. Besonders bevorzugt umfassen die gespeicherten Daten insbesondere Einbaukriterien für den Einbau eines Messgeräts.

Durch einen Vergleich bzw. durch ein Abrufen der in der Speichereinheit hinterlegten Daten kann einerseits eine Zuordnung des erkannten Messgeräts und/oder der weiteren Komponenten der Anlage besonders einfach und zuverlässig erfolgen. Andererseits sind ebenso die zu prüfenden Einbaukriterien für das erfasste, zu prüfende Messgerät unmittelbar abrufbar.

Besonders bevorzugt ist es ebenfalls, wenn das wenigstens eine Messgerät durch den Nutzer und/oder durch die Recheneinheit in der Visualisierung, also der visuellen Darstellung der Anlage durch ein alternatives Messgerät ausgetauscht wird und dass die Einbauposition des alternativen Messgerätes in der Anlage bewertet wird und/oder dass die optimale Einbauposition des alternativen Messgeräts in der Anlage bestimmt wird. Gemäß dieser Ausgestaltung kann beurteilt werden, ob für die gegebene Einbausituation ein anderes als das zunächst gedachte Messgerät geeigneter ist.

Gemäß einer zweiten Lehre der vorliegenden Erfindung wird die eingangs dargelegte Aufgabe durch ein Augmented-Reality Gerät gemäß Anspruch 10 gelöst.

Gemäß einer dritten Lehre der vorliegenden Erfindung wird die eingangs dargelegte Aufgabe durch ein Verfahren zum Einbau eines Durchflussmessgeräts oder Füllstandmessgeräts in eine Anlage gemäß Anspruch 11 gelöst.

Vorzugsweise wird die Anlage vor dem Einbau des Messgeräts gemäß dem in dem Verfahren zur Bewertung der Einbauposition vorgeschlagenen Optimierungsvorschlag baulich verändert.

Im Einzelnen gibt es nun eine Vielzahl von Möglichkeiten die erfindungsgemäßen Verfahren und das erfindungsgemäße Augmented-Reality-Gerät auszugestalten und weiterzubilden. Hierzu wird verwiesen auf die den unabhängigen Patentansprüchen nachgeordneten Patentansprüche sowie als auch auf die nachfolgende Beschreibung von bevorzugten Ausführungsbeispielen in Verbindung mit der Zeichnung. In der Zeichnung zeigen:

Fig. 1    ein erstes Ausführungsbeispiel eines erfindungsgemäßen Augmented- Reality-Gerätes,

Fig. 2    ein zweites Ausführungsbeispiel eines erfindungsgemäßen Augmented-Reality-Gerätes,

Fig. 3    ein erstes Ausführungsbeispiel eines erfindungsgemäßen Verfahrens zur Bewertung der Einbauposition eines Messgeräts,

Fig. 4    ein zweites Ausführungsbeispiel eines erfindungsgemäßen Verfahrens,

Fig. 5    ein weiteres Ausführungsbeispiel eines erfindungsgemäßen Verfahrens und

Fig. 6    ein Ausführungsbeispiel eines erfindungsgemäßen Verfahrens zum Einbau eines Messgeräts in eine Anlage.

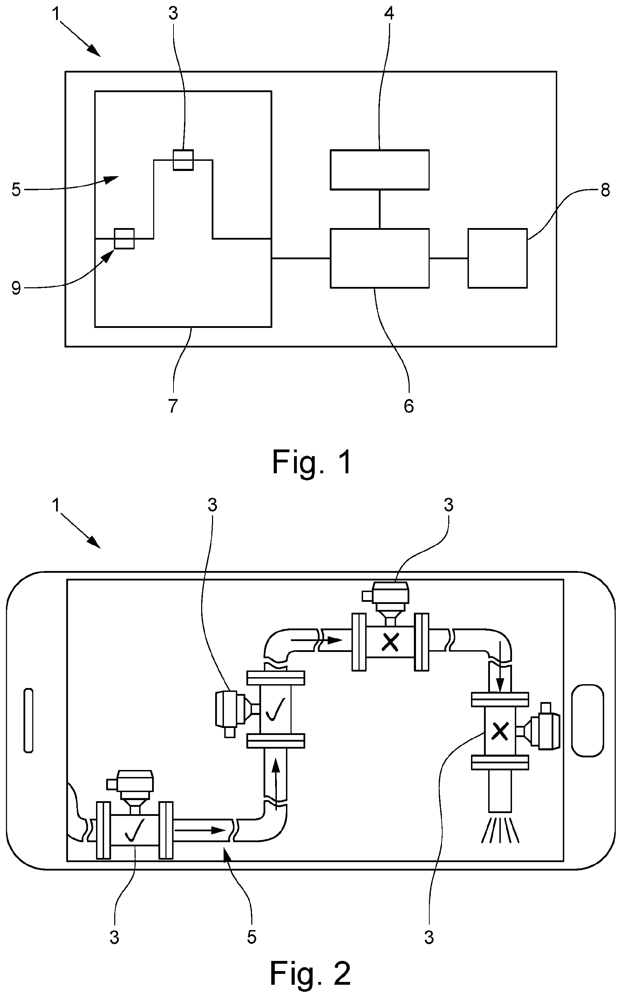

Fig. 1 zeigt ein erstes Ausführungsbeispiel eines Augmented-Reality-Geräts 1 mit einer Erfassungseinheit 4 zur Erfassung der realen Anlage 5, mit einer Recheneinheit 6 und mit einer Anzeigeeinheit 7. Die Erfassungseinheit 4 weist eine Kamera auf, mit der die bestehende Anlage 5 erfasst werden kann. Insbesondere erfasst die Erfassungseinheit 4 ein in der Anlage in einer Einbauposition eingebautes Messgerät 3. Im Betrieb leitet die Erfassungseinheit 4 die aufgenommenen Daten an die Recheneinheit 6 weiter, die wiederum die Daten zur Visualisierung aufbereitet und an die Anzeigeeinheit 7 weiterleitet. Die Anzeigeeinheit 7 ist derart ausgestaltet, dass sie im Betrieb die aufgenommene Anlage 5 darstellt.

Die Recheneinheit 6 ist zudem derart ausgebildet, dass sie die Art und/oder die Größe der einzelnen Komponenten der Anlage 5 erkennt, insbesondere erkennt die Recheneinheit das eingebaute Messgerät 3. Hierfür ist eine Speichereinheit 8 vorhanden, in der Daten von einer Mehrzahl von Messgeräten und von verschiedenen Komponenten der Anlage 5 hinterlegt sind. Insbesondere sind für die einzelnen Messgeräte Vorgaben für den Einbau der Messgeräte hinterlegt. Durch einen Vergleich der von der Erfassungseinheit 4 erfassten Daten und den in der Speichereinheit 8 hinterlegten Daten kann die Recheneinheit 6 insbesondere die Art des Messgeräts bestimmen.

Zudem ist die Recheneinheit 6 derart ausgebildet, dass sie anhand der hinterlegten Einbaukriterien die Einbauposition des erfassten Messgeräts 3 bewertet und diese Bewertung in Form einer farblichen Kennzeichnung des Messgeräts 3 über die Anzeigeeinheit 7 ausgibt.

Neben der Bewertung der Einbauposition des erfassten Messgeräts 3 kann die Recheneinheit 6 ebenfalls anhand der hinterlegten Einbaukriterien eine optimale Einbauposition 9 für das in der Anlage 5 vorhandene Messgerät 3 vorschlagen.

Darüber hinaus kann die Recheneinheit 6 ebenfalls basierend auf den in der Speichereinheit 8 hinterlegten Daten ein alternatives Messgerät 3 oder eine Änderung in der bestehenden Anlage 5 vorschlagen, um die Einbausituation des Messgeräts 3 zu verbessern.

Fig. 2 zeigt ein weiteres Ausführungsbeispiel eines Augmented-Reality-Geräts 1. Im dargestellten Ausführungsbeispiel ist das Augmented-Reality-Gerät als Smart-Phone ausgebildet. Die Anzeigeeinheit 7 ist als Display ausgebildet. Auf dem Display ist der relevante Bereich der Anlage 5 visuell dargestellt. Die Fließrichtung des durch das dargestellte Rohrsystem fließenden Mediums ist durch die Pfeile angezeigt. Zudem sind vier Messgeräte 3 dargestellt, die durch den Nutzer virtuell in der Anlage 5 platziert sind.

Die Einbauposition jedes einzelnen Messgeräts 3 ist durch die hier nicht dargestellte Recheneinheit 6 bewertet, wobei die Bewertung durch einen Haken für eine gut geeignete Einbausituation und durch ein Kreuz für eine schlecht geeignete Einbauposition dargestellt ist.

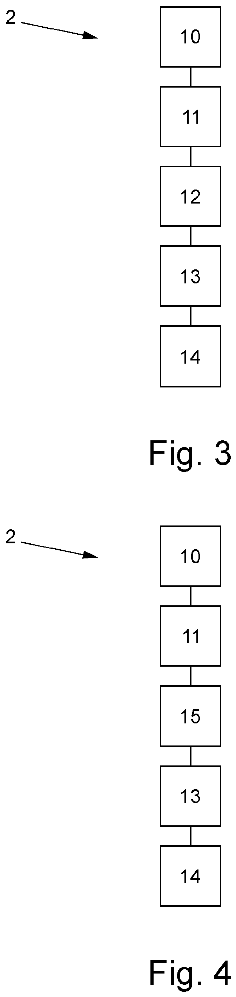

In Fig. 3 ist ein erstes Ausführungsbeispiel eines Verfahrens 2 zur Bewertung der Einbauposition eines Messgeräts 3 mit einem Augmented-Reality-Gerät 1, wobei das Augmented-Reality-Gerät 1 gemäß dem in Fig. 1 gezeigten Ausführungsbeispiel ausgebildet ist.

Das Verfahren 2 umfasst die folgenden Schritte:
In einem ersten Schritt wird die Anlage 5 durch die Erfassungseinheit 4 erfasst. Insbesondere wird ein Messgerät 3 sowie die das Messgerät 3 umgebende Einbausituation erfasst.

Die erfasste Anlage 5 wird auf der Anzeigeeinheit 7 visuell dargestellt 11.

Durch die Recheneinheit 6 wird das erfasste Messgerät 3 zugeordnet 12.

Basierend auf der Zuordnung wird die Einbauposition des Messgerätes durch die Recheneinheit bewertet 13.

Schließlich wird die Bewertung auf der Anzeigeeinheit 7 dargestellt 14.

Fig. 4 zeigt ein zweites Ausführungsbeispiel eines Verfahrens 2 zur Bewertung der Einbauposition eines Messgeräts 3 mit einem Augmented-Reality-Gerät 1, wobei das Augmented-Reality-Gerät 1 gemäß dem in Fig. 1 dargestellten Ausführungsbeispiel ausgebildet ist.

Ebenso wie in dem in Fig. 3 dargestellten Verfahren 2 wird zunächst die Anlage 5 durch die Erfassungseinheit 4 erfasst 10. Im Detail wird der Bereich der Anlage 5 erfasst, in den ein Messgerät 3 eingebaut werden soll.

Dieser Bereich der Anlage 5 wird auf der Anzeigeeinheit 7 visuell dargestellt 11.

Nun platziert 15 der Nutzer manuell ein virtuelles Messgerät in die Visualisierung der Anlage 5. Hierzu kann der Nutzer auf die in der Speichereinheit 8 hinterlegten Daten unterschiedlicher Messgeräte 3 zugreifen.

Anschließend bewertet 13 die Recheneinheit 6 die Einbauposition des Messgeräts 3 anhand der für das Messgerät 3 hinterlegten Einbaukriterien.

Die Bewertung wird in einem nächsten Schritt 14 in der Visualisierung der Anlage 5 dargestellt.

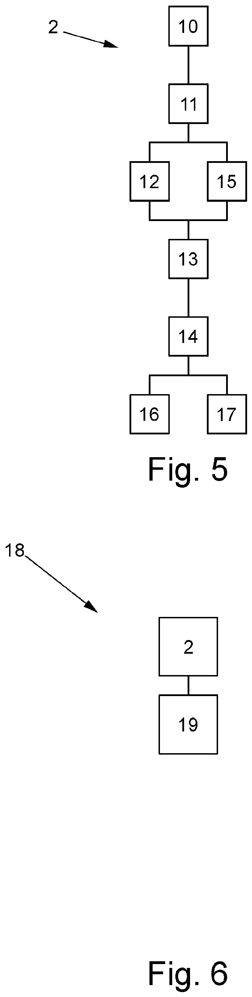

Ein nächstes in Fig. 5 dargestelltes Ausführungsbeispiel des Verfahrens 2 ergänzt die in den Fig. 3 und 4 dargestellten Ausführungsbeispiele. Zunächst wird, wie bereits dargelegt, die Anlage 5 erfasst 10 und auf der Anzeigeeinheit 7 dargestellt 11. Alternativ oder einander ergänzend wird ein erfasstes Messgerät 3 zugeordnet 12 und/oder der Nutzer platziert 15 ein virtuelles Messgerät 3 in die Visualisierung der Anlage 5. Anschließend wird die Einbauposition des erfassten Messgeräts 3 bzw. des virtuellen Messgeräts 3 bewertet 13 und die Bewertung wird dargestellt 14. Gemäß dem dargestellten Ausführungsbeispiel wird weiterhin eine hinsichtlich der einzuhaltenden Kriterien optimale Einbauposition 9 dargestellt 16. Alternativ oder zusätzlich schlägt die Recheneinheit 6 ein anderes Messgerät 3 vor, wobei das alternative Messgerät 3 in der Visualisierung dargestellt wird 17.

Fig. 6 zeigt ein Ausführungsbeispiel eines Verfahrens 18 zum Einbau eines Messgeräts 3 in eine Anlage 5. Zunächst wird in einem ersten Schritt ein Verfahren 2 zur Bewertung der Einbauposition des Messgeräts durchgeführt, wobei ebenfalls die optimale Einbauposition des Messgeräts 3 bestimmt wird. In einem nächsten Schritt 19 wird dann das Messgerät 3 an die optimale Einbauposition in die Anlage 5 eingebaut. Diese Ausgestaltung weist den Vorteil auf, dass das Messgerät unter optimalen Bedingungen eingebaut werden kann, was die Funktionsweise des Messgeräts deutlich verbessert.

Bezugszeichen

1 Augmented-Reality-Gerät
2 Verfahren zur Bewertung der Einbauposition eines Messgeräts
3 Messgerät
4 Erfassungseinheit
5 Anlage
6 Recheneinheit
7 Anzeigeeinheit
8 Speichereinheit
9 optimale Einbauposition
10 Erfassung der Anlage durch die Erfassungseinheit
11 Visuelle Darstellung der Anlage auf der Anzeigeeinheit
12 Zuordnung des Messgeräts
13 Bewertung der Einbauposition des Messgeräts
14 Darstellung der Bewertung
15 Platzierung eines virtuellen Messgerätes in die Visualisierung der Anlage
16 Darstellung der optimalen Einbauposition
17 Darstellung eines alternativen Messgeräts
18 Verfahren zum Einbau eines Messgeräts in eine Anlage
19 Einbau eines Messgeräts in eine Anlage

**Patentansprüche**

1. Verfahren (2) zur Bewertung der Einbauposition eines Messgeräts (3), nämlich eines Durchflussmessgeräts oder eines Füllstandmessgeräts, in einer Anlage (5) mit einem Augmented-Reality-Gerät (1), wobei das Augmented-Reality-Gerät (1) wenigstens eine Erfassungseinheit (4) zur Erfassung der Anlage (5), wenigstens eine Recheneinheit (6) und wenigstens eine Anzeigeeinheit (7) aufweist,

   wobei das Verfahren (2) die folgenden Schritte umfasst:

   - zumindest bereichsweise Erfassung (10) der Anlage (5) durch die wenigstens eine Erfassungseinheit (4),
   - visuelle Darstellung (11) der Anlage (5) auf der Anzeigeeinheit (7) auf Grundlage der bereichsweisen Erfassung (10) der Anlage (5),
   - Zuordnung (12) wenigstens eines in der Anlage (5) in einer Einbauposition eingebauten Messgerätes (3) und/oder Platzierung (15) wenigstens eines virtuellen Durchflussmessgeräts oder Füllstandmessgeräts in einer Einbauposition in die visuelle Darstellung (11) der Anlage (5), wobei die Zuordnung des Messgeräts sowohl die Erkennung der Art des Messgeräts, also ob es sich um ein Durchflussmessgerät oder ein Füllstandmessgerät handelt, als auch die Erkennung des Messgerätetyps umfasst,
   - Bewertung (13) der Einbauposition des wenigstens einen erkannten und/oder virtuellen Durchflussmessgeräts oder Füllstandmessgeräts durch die Recheneinheit (6), wobei zur Bewertung (13) der Einbauposition des wenigstens einen erkannten und/oder virtuellen Durchflussmessgeräts oder Füllstandmessgeräts Einbaukriterien herangezogen werden, wobei die Einbaukriterien die relative Lage des Durchflussmessgeräts oder Füllstandmessgeräts zu wenigstens einer weiteren Komponente der Anlage (5) und/oder die Flussrichtung eines Mediums und/oder die Art des Messgeräts und/oder die Einbauumgebung des Durchflussmessgeräts oder Füllstandmessgeräts berücksichtigen,

wobei die Recheneinheit (6) unter Berücksichtigung der Einbaukriterien eine optimale Einbauposition (9) des Durchflussmessgeräts oder Füllstandmessgeräts in der Anlage (5) bestimmt, wobei zur Bestimmung der optimalen Einbauposition (9) die Bewertung (13) mehrerer Einbaupositionen verglichen wird, und dass die Einbauposition mit der besten, insbesondere der höchsten, Bewertung als optimale Einbauposition (9) über die Anzeigeeinheit (7) ausgegeben wird , und

- Darstellung (14) der Bewertung auf der Anzeigeeinheit (7), wobei die optimale Einbauposition (9) in der Visualisierung der Anlage (5) dargestellt wird , und
- wobei wenigstens eine Komponente der Anlage (5) durch den Nutzer und/oder durch die Recheneinheit (6) hinsichtlich ihrer Art und/oder ihrer Position und/oder ihrer Abmessungen und/oder ihrer Orientierung in der Visualisierung der Anlage (5), also virtuell, geändert wird und/oder wenigstens eine Komponente der Visualisierung der Anlage (5) virtuell hinzugefügt und/oder aus der Anlage (5) entfernt wird, sodass im Ergebnis die Anlage (5) virtuell zumindest teilweise verändert wird und die Einbauposition des Durchflussmessgeräts oder Füllstandmessgeräts in der veränderten Anlage (5) bewertet wird und/oder die optimale Einbauposition des Durchflussmessgeräts oder Füllstandmessgeräts in der veränderten Anlage (5) bestimmt wird.

2. Verfahren (2) nach Anspruch 1, wobei das Augmented-Reality-Gerät (1) wenigstens ein AR Headset, Smart Glasses, wenigstens ein Smart Phone oder wenigstens ein Tablet umfasst.

3. Verfahren (2) nach Anspruch 1 oder 2, wobei die Erfassungseinheit (4) Bilddaten und/oder Videodaten und/oder Wärmebilddaten und/oder Stereodaten und/oder Tiefenkameradaten an die Recheneinheit (6) und/oder an die Anzeigeeinheit (7) weiterleitet.

4. Verfahren (2) nach einem der Ansprüche 1 bis 3, wobei die die Recheneinheit (6) basierend auf den von der Erfassungseinheit (4) übermittelten Daten die Art und/oder die Größe und/oder die Länge und/oder die Orientierung einzelner Komponenten der Anlage (5) erkennt.

5. Verfahren (2) nach einem der Ansprüche 1 bis 4, wobei die Bewertung (13) der Einbauposition auf einer Skala erfolgt, wobei die Darstellung der Bewertung durch eine farbliche Kennzeichnung und/oder durch einen Zahlenwert und/oder durch einen weiteren skalierbaren Parameter angezeigt wird.

6. Verfahren (2) nach einem der Ansprüche 1 bis 5, wobei die Bewertung (13) eine Gesamtbewertung umfasst, wobei die Gesamtbewertung sich aus der Kombination mehrerer Einzelbewertungen ergibt, wobei jede Einzelbewertung die Bewertung eines einzelnen Einbaukriteriums betrifft.

7. Verfahren (2) nach Anspruch 6, wobei zur Bestimmung der optimalen Einbauposition (9) die Gesamtbewertung mehrerer Einbaupositionen, vorzugsweise aller möglichen Einbaupositionen verglichen wird, und dass die Einbauposition mit der besten, insbesondere der höchsten, Bewertung als optimale Einbauposition (9) über die Anzeigeeinheit (7) ausgegeben wird.

8. Verfahren (2) nach einem der Ansprüche 1 bis 7, wobei das Augmented-Reality-Gerät (1) wenigstens eine Speichereinheit (8) aufweist, wobei in der Speichereinheit (8) Daten von einer Mehrzahl von Durchflussmessgeräten oder Füllstandmessgeräten und/oder von einer Mehrzahl von weiteren Komponenten der Anlage (5) hinterlegt sind, wobei die Recheneinheit (6) basierend auf den hinterlegten Daten insbesondere die Art des Messgeräts und/oder die Art und/oder die Abmessungen wenigstens einer weiteren Komponente bestimmt.

9. Verfahren (2) nach einem der Ansprüche 1 bis 8, wobei das wenigstens eine Durchflussmessgerät oder Füllstandmessgerät durch den Nutzer und/oder durch die Recheneinheit (6) in der Visualisierung der Anlage (5) durch ein alternatives Durchflussmessgerät oder Füllstandmessgerät ausgetauscht wird und dass die Einbauposition des alternativen Durchflussmessgeräts oder Füllstandmessgeräts in der Anlage (5) bewertet wird und/oder dass die optimale Einbauposition (9) des alternativen Durchflussmessgeräts oder Füllstandmessgeräts in der Anlage (5) bestimmt wird.

10. Augmented-Reality Gerät (1) mit wenigstens einer Erfassungseinheit (4) zur zumindest bereichsweisen Erfassung einer Anlage (5), mit wenigstens einer Recheneinheit (6) und mit wenigstens einer Anzeigeeinheit (7), wobei das Augmented- Reality Gerät (1) derart ausgebildet ist, dass es zur Bewertung der Einbauposition eines Durchflussmessgeräts oder Füllstandmessgeräts in der Anlage (5) ein Verfahren (2) gemäß einem der Ansprüche 1 bis 9 durchführt.

11. Verfahren (16) zum Einbau eines Durchflussmessgeräts oder Füllstandmessgeräts in eine Anlage (5), wobei in einem ersten Schritt ein Verfahren (2) zur Bewertung der Einbauposition eines Durchflussmessgeräts oder Füllstandmessgeräts gemäß einem der Ansprüche 1 bis 9 durchgeführt wird , und wobei das Durchflussmessgerät oder Füllstandmessgerät in einem zweiten Schritt gemäß der optimalen Einbauposition in die Anlage (5) eingebaut wird (19).

**Claims**

1. Method (2) for evaluating the installation position of a measuring device (3), in particular a flowmeter or a fill level measuring device, in a system (5) using an augmented reality device (1), wherein the augmented reality device (1) has at least one capturing unit (4) for capturing the system (5), at least one computing unit (6) and at least one display unit (7),

    wherein the method (2) comprises the following steps:

    - at least partially capturing (10) the system (5) by the at least one capturing unit (4),
    - visual representation (11) of the system (5) on the display unit (7) on the basis of the partial capturing (10) of the system (5),
    - assignment (12) of at least one measuring device (3) installed in the system (5) in an installation position and/or placement (15) of at least one virtual flowmeter or fill level measuring device in an installation position in the visual representation (11) of the system (5), wherein the assignment of the measuring device comprises both the recognition of the type of measuring device, i.e., whether it is a flowmeter or a fill level measuring device, and the recognition of the measuring device type,
    - evaluation (13) of the installation position of the at least one recognized and/or virtual flowmeter or fill level measuring device by the computing unit (6), wherein installation criteria are used to evaluate (13) the installation position of the at least one detected and/or virtual flowmeter or level measuring device, wherein the installation criteria take into account the relative position of the flowmeter or level measuring device to at least one other component of the system (5) and/or the flow direction of a medium and/or the type of measuring device and/or the installation environment of the flowmeter or level measuring device,

    wherein the computing unit (6) determines an optimum installation position (9) of the flowmeter or level measuring device in the system (5), taking into account the installation criteria,
    wherein, in order to determine the optimum installation position (9), the evaluation (13) of several installation positions is compared, and that the installation position with the best, in particular the highest, evaluation is output as the optimum installation position (9) via the display unit (7).

    - representation (14) of the evaluation on the display unit (7), wherein the optimum installation position (9) is displayed in the visualization of the system (5), and

    wherein at least one component of the system (5) is changed by the user and/or by the computing unit (6) with regard to its type and/or its position and/or its dimensions and/or its orientation in the visualization of the system (5), i.e. virtually, and/or at least one component of the visualization of the system (5) is added and/or removed from the system (5) virtually, so that, as a result, the system is at least partially modified virtually and the installation position of the flowmeter or level measuring device in the modified system (5) is evaluated and/or the optimum installation position of the flowmeter or level measuring device in the modified system is determined.

2. Method (2) according to claim 1, wherein the augmented reality device (1) comprises at least one AR headset, smart glasses, at least one smart phone or at least one tablet.

3. Method (2) according to claim 1 or 2, wherein the capturing unit (4) forwards image data and/or video data and/or thermal image data and/or stereo data and/or depth camera data to the computing unit (6) and/or to the display unit (7).

4. Method (2) according to any one of claims 1 to 3, wherein the computing unit (6) recognizes the type and/or the size and/or the length and/or the orientation of individual components of the system (5) based on the data transmitted by the capturing unit (4).

5. Method (2) according to any one of claims 1 to 4, wherein the evaluation (13) of the installation position is carried out on a scale, wherein the representation of the evaluation is indicated by a color coding and/or by a numerical value and/or by a further scalable parameter.

6. Method (2) according to any one of claims 1 to 5, wherein the evaluation (13) comprises an overall evaluation, wherein the overall evaluation results from the combination of several individual evaluations, wherein each individual evaluation relates to the evaluation of an individual installation criterion.

7. Method (2) according to claim 6, wherein, in order to determine the optimal installation position (9), the overall evaluation of a plurality of installation positions, preferably of all possible installation positions, is compared, and that the installation position with the best, in particular the highest, evaluation is output via the display unit (7) as the optimal installation position (9).

8. Method (2) according to any one of claims 1 to 7, wherein the augmented reality device (1) has at least one memory unit (8), wherein data from a plurality of flowmeters or fill level measuring devices and/or from a plurality of further components of the system (5) is stored in the memory unit (8), wherein the computing unit (6) determines, in particular, the type of measuring device (3) and/or the type and/or the dimensions of at least one further component on the basis of the stored data.

9. Method (2) according to any one of claims 1 to 8, **characterized in that** the at least one flowmeter or fill level measuring device is replaced by an alternative measuring device (3) by the user and/or by the computing unit (6) in the visualization of the system (5), and **in that** the installation position of the alternative flow meter or fill level measuring device in the system (5) is evaluated and/or that the optimal installation position (9) of the alternative flowmeter or fil level measuring device in the system (5) is determined.

10. Augmented reality device (1) with at least one capturing unit (4) for at least partially capturing of the system (5), with at least one computing unit (6) and with at least one display unit (7),
wherein the augmented reality device (1) is designed such that, in order to evaluate the installation position of a flowmeter or fill level measuring device in the system (5), it carries out a method (2) according to any one of claims 1 to 9.

11. Method (16) for installing a flowmeter or fill level measuring device in a system (5), wherein, in a first step, a method (2) for evaluating the installation position of a flowmeter or fill level measuring device is carried out according to any one of claims 1 to 9, and wherein, in a second step, the flowmeter or fill level measuring device is installed (19) in the system (5) preferably according to the optimal installation position.

**Revendications**

1. Procédé (2) pour évaluer la position de montage d'un appareil de mesure (3), à savoir un débitmètre ou un appareil de mesure de niveau, dans une installation (5), au moyen d'un appareil de réalité augmentée (1), l'appareil de réalité augmentée (1) comprenant au moins une unité de détection (4) pour détecter l'installation (5), au moins une unité de calcul (6) et au moins une unité d'affichage (7),

le procédé (2) comprenant les étapes suivantes :

- détection au moins par zones (10) de l'installation (5) par ladite au moins une unité de détection (4),
- représentation visuelle (11) de l'installation (5) sur l'unité d'affichage (7) sur la base de la détection par zones (10) de l'installation (5),
- attribution (12) d'au moins un appareil de mesure (3) installé dans une position de montage dans l'installation (5), et/ou placement (15) d'au moins un débitmètre virtuel ou appareil virtuel de mesure de niveau dans une position de montage dans la représentation visuelle (11) de l'installation (5), l'attribution de l'appareil de mesure comprenant à la fois la reconnaissance du type de l'appareil de mesure, c'est-à-dire s'il s'agit d'un débitmètre ou d'un appareil de mesure de niveau, et la reconnaissance du type d'appareil de mesure,

- évaluation (13) de la position de montage dudit au moins un débitmètre ou appareil de mesure de niveau détecté et/ou virtuel par l'unité de calcul (6), des critères de montage étant utilisés pour l'évaluation (13) de la position de montage dudit au moins un débitmètre et/ou appareil de mesure de niveau détecté et/ou virtuel, les critères de montage tenant compte de la position relative du débitmètre ou de l'appareil de mesure de niveau par rapport à au moins un autre composant de l'installation (5) et/ou de la direction d'écoulement d'un fluide et/ou du type de l'appareil de mesure et/ou de l'environnement d'installation du débitmètre ou de l'appareil de mesure de niveau,

l'unité de calcul (6) déterminant une position de montage optimale (9) du débitmètre ou de l'appareil de mesure de niveau dans l'installation (5) en tenant compte des critères de montage,
l'évaluation (13) de plusieurs positions de montage étant comparée pour déterminer la position de montage optimale (9), et la position de montage ayant la meilleure évaluation, en particulier la plus élevée, étant affichée via l'unité d'affichage (7) comme étant la position de montage optimale (9), et

- représentation (14) de l'évaluation sur l'unité d'affichage (7), la position de montage optimale (9) étant représentée dans la visualisation de l'installation (5), et
- au moins un composant de l'installation (5) étant modifié, c'est-à-dire virtuellement, par l'utilisateur et/ou par l'unité de calcul (6) en ce qui concerne son type et/ou sa position et/ou ses dimensions et/ou son orientation dans la visualisation de l'installation (5), et/ou au moins un composant de la visualisation de l'installation (5) étant virtuellement ajouté et/ou supprimé de l'installation (5), de sorte que, par conséquent, l'installation (5) est au moins partiellement modifiée virtuellement et la position de montage du débitmètre ou de l'appareil de mesure de niveau dans l'installation modifiée (5) est évaluée et/ou la position de montage optimale du débitmètre ou de l'appareil de mesure de niveau dans l'installation (5) modifiée est déterminée.

2. Procédé (2) selon la revendication 1, dans lequel le dispositif de réalité augmentée (1) comprend au moins un casque à réalité augmentée, des lunettes intelligentes, au moins un smartphone ou au moins une tablette.

3. Procédé (2) selon la revendication 1 ou la revendication 2, dans lequel l'unité de détection (4) transmet des données d'image et/ou des données vidéo et/ou des données d'image thermique et/ou des données stéréo et/ou des données de caméra de profondeur à l'unité de calcul (6) et/ou à l'unité d'affichage (7).

4. Procédé (2) selon l'une des revendications 1 à 3, dans lequel l'unité de calcul (6) reconnaît le type et/ou la taille et/ou la longueur et/ou l'orientation des différents composants de l'installation (5) sur la base des données transmises par l'unité de détection (4).

5. Procédé (2) selon l'une des revendications 1 à 4, dans lequel l'évaluation (13) de la position de montage s'effectue sur une échelle,
la représentation de l'évaluation étant indiquée par un marquage coloré et/ou par une valeur numérique et/ou par un autre paramètre modulable.

6. Procédé (2) selon l'une des revendications 1 à 5, dans lequel l'évaluation (13) comprend une évaluation globale, l'évaluation globale résultant de la combinaison de plusieurs évaluations individuelles, chaque évaluation individuelle concernant l'évaluation d'un critère de montage individuel.

7. Procédé (2) selon la revendication 6, dans lequel, pour déterminer la position de montage optimale (9), l'évaluation globale de plusieurs positions de montage, de préférence de toutes les positions de montage possibles, est comparée, et la position de montage ayant la meilleure évaluation, en particulier la plus élevée, est affichée via l'unité d'affichage (7) comme étant la position de montage optimale (9).

8. Procédé (2) selon l'une des revendications 1 à 7, dans lequel l'appareil de réalité augmentée (1) comprend au moins une unité de mémoire (8), dans l'unité de mémoire (8) étant enregistrées des données d'une pluralité de débitmètres ou d'appareils de mesure de niveau et/ou d'une pluralité d'autres composants de l'installation (5), l'unité de calcul (6) déterminant en particulier le type de l'appareil de mesure et/ou le type et/ou les dimensions d'au moins un autre composant sur la base des données enregistrées.

9. Procédé (2) selon l'une des revendications 1 à 8, dans lequel ledit au moins un débitmètre ou appareil de mesure de niveau est remplacé par l'utilisateur et/ou par l'unité de calcul (6) dans la visualisation de l'installation (5) par un autre débitmètre ou appareil de mesure de niveau, et en ce que la position de montage de l'autre débitmètre ou appareil de mesure de niveau dans l'installation (5) est évaluée et/ou en ce que la position de montage optimale (9) de l'autre débitmètre ou appareil de mesure de niveau dans l'installation (5) est déterminée.

10. Appareil de réalité augmentée (1) comprenant au moins une unité de détection (4) pour détecter au moins par zones une installation (5), au moins une unité de calcul (6) et au moins une unité d'affichage (7), l'appareil de réalité augmentée (1) étant conçu de telle sorte qu'il met en œuvre un procédé (2) selon l'une des revendications 1 à 9 afin d'évaluer la position de montage d'un débitmètre ou d'un appareil de mesure de niveau dans l'installation (5).

11. Procédé (16) pour le montage d'un débitmètre ou d'un appareil de mesure de niveau dans une installation (5), dans lequel, dans une première étape, un procédé (2) est mis en œuvre pour évaluer la position de montage d'un débitmètre ou d'un appareil de mesure de niveau conformément à l'une des revendications 1 à 9, et dans lequel, dans une deuxième étape, le débitmètre ou l'appareil de mesure de niveau est monté (19) dans l'installation (5) conformément à la position de montage optimale.

Fig. 1

Fig. 2

Fig. 3

Fig. 4

2 →

```
        ┌────┐
        │ 10 │
        └────┘
           │
        ┌────┐
        │ 11 │
        └────┘
           │
     ┌─────┴─────┐
  ┌────┐      ┌────┐
  │ 12 │      │ 15 │
  └────┘      └────┘
     └─────┬─────┘
        ┌────┐
        │ 13 │
        └────┘
           │
        ┌────┐
        │ 14 │
        └────┘
           │
     ┌─────┴─────┐
  ┌────┐      ┌────┐
  │ 16 │      │ 17 │
  └────┘      └────┘
```

## Fig. 5

18

```
  ┌────┐
  │ 2  │
  └────┘
     │
  ┌────┐
  │ 19 │
  └────┘
```

## Fig. 6

**EP 3 889 741 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018104056 B3
- DE 102017010190 A1
- US 20190035152 A1
- US 20130144482 A1
- US 20170255450 A1
- US 20160247324 A
- DE 102018214210 A1
- US 2013038633 A1
- US 2018129276 A1
- US 2019020721 A1
- US 2017076500 A1